# EUROPEAN PATENT APPLICATION

(11) **EP 3 441 854 A1**
(43) Date of publication of application: **13.02.2019**
(21) Application number: 18188062.6
(22) Date of filing: 08.08.2018
(51) Int. Cl.: G06F 3/01, H02K 35/02, G06F 1/16, G08B 6/00, H02K 33/00, G09B 21/00

(54) **LOCALIZED HAPTICS USING SHIFTING MASSES**

(30) Priority: 08.08.2017 US 201715671928
(71) Applicant: Immersion Corporation, San Jose, CA 95134 (US)
(72) Inventor: MAALOUF, Johnny, Montreal, Québec H2W 2R2 (CA); KHOSHKAVA, Vahid, Montreal, Québec H2W 2R2 (CA)
(74) Representative: McDougall, Robert Campbell

(57) **Abstract**

In one example, hollow tubes (130) each having a spherical mass (140) inside are positioned between two plates (110, 120). Each plate can have a matrix of nodes (110a,120a) that mirrors the other plate. If the mass (140) is a ferromagnetic mass, then each node (110a, 120a) can have an electromagnetic coil such that the ferromagnetic mass. If the mass (140) is a conductive mass, then each node (110a, 120a) can be a conductive node. The conductive nodes can have the same type of charge or opposing charges. The conductive mass can be negatively charged, positively charged, or part can be positively charged and part negatively charged. Spring(s) can be between the mass (140) and the first plate (110) or between the mass (140) and the second plate (120), or both. Electric current(s) can be applied to a node (110a) in the first plate, a node (120a) in the second plate, or both, which causes the mass (140) to shift to output a haptic effect.

## Description

### FIELD

The present application generally relates to haptics and more specifically relates to providing localized haptics using shifting masses.

### BACKGROUND

Traditionally, mechanical buttons have provided physical tactile sensations to users of electronic devices. However, as the size of electronic devices has decreased and the portability of electronic devices has increased, the number of mechanical buttons on electronic devices has decreased and some electronic devices do not have any mechanical buttons. Haptic output devices may be included in such devices to output haptic effects to users.

### SUMMARY

Various examples are described for devices, systems, and methods for providing localized haptics using shifting masses.

One example disclosed system comprises a hollow tube comprising a first end and a second end. The second end may be opposite the first end. The hollow tube can define a cavity between the first end and the second end. The system further comprises a first node corresponding to the first end. In this example, the system further comprises a second node corresponding to the second end. The system further comprises a mass disposed within the cavity. In an example, the mass is movable within the cavity to output a haptic effect when an electrical current is provided to the first node. In another example, the mass is movable within the cavity to output a haptic effect when an electrical current is provided to the second node. In yet another example, the mass is movable within the cavity to output a haptic effect when a first electrical current is provided to the first node and a second electrical current is provided to the second node. The first electrical current and the second electrical current may be provided simultaneously. The first electrical current and the second electrical current can be provided non-simultaneously.

The system may be modified in any suitable way as disclosed herein including, but not limited to, any one or more of the following. In examples, the first node has a width between 5 microns and 3 millimeters. The first node may have a length between 5 microns and 3 millimeters. In examples, the second node has a width between 5 microns and 3 millimeters. The second node may have a length between 5 microns and 3 millimeters. In examples, the second node mirrors the first node.

In examples, the hollow tube has a width between 5 microns and 3 millimeters. The hollow tube may have a length between 5 microns and 3 millimeters. In some examples, the hollow tube has a same width as the first node, the second node, or both the first node and the second node. In some examples, the hollow tube has a same length as the first node, the second node, or both the first node and the second node. The hollow tube may have a diameter between 5 microns and 3 millimeters. In examples, the hollow tube has a height between the first end and the second end of at least 0.5 millimeters. In one example, the hollow tube has a height between the first end and the second end of between 0.5 millimeters and 10 millimeters. The hollow tube may be, for example, a hollow cylinder or a hollow cuboid. The mass may be, for example, a spherical mass or a cuboid mass.

In examples, the system further comprises a first plate comprising a first matrix of nodes including the first node. In examples, the system further comprises a second plate comprising a second matrix of nodes including the second node. In examples, the system further comprises a plurality of hollow tubes including the hollow tube. Each hollow tube in the plurality of hollow tubes can correspond to one node in the first matrix of nodes. Each hollow tube in the plurality of hollow tubes can correspond to one node in the second matrix of nodes. In examples, the system further comprises a plurality of masses including the mass. Each mass in the plurality of masses can be disposed within a cavity defined by one hollow tube in the plurality of hollow tubes. In examples, at least two nodes in the first matrix of nodes and/or at least two nodes in the second matrix of nodes are configured to be simultaneously energized. In examples, at least two of the masses in the plurality of masses simultaneously move within their respective cavities to output the haptic effect. The haptic effect can be a wave haptic effect produced by energizing nodes in a sequence. The sequence can include energizing a first node, then energizing a second node that is adjacent to the first node, and then energizing a third node that is adjacent to the second node. The sequence can include deenergizing the first node prior to energizing the second node. The sequence may include deenergizing the second node prior to energizing the third node.

In examples, the mass comprises a ferromagnetic mass. The first node may comprise a first electromagnetic coil. The second node may comprise a second electromagnetic coil. In examples, the system further comprises a first spring within the hollow tube. The spring can be disposed within a cavity defined by a hollow tube and positioned between the ferromagnetic mass and the first node. The spring can be disposed within a cavity defined by a hollow tube and positioned between the ferromagnetic mass and the second node. In some examples, the system further comprises a second spring within the hollow tube. In this example, the first spring may be disposed within a cavity defined by a hollow tube and positioned between the ferromagnetic mass and the first node, and the second spring may be disposed within the cavity defined by the hollow tube and positioned between the ferromagnetic mass and the second node.

In examples, the mass comprises a conductive mass. The conductive mass may be entirely positively charged. The conductive mass can be entirely negatively charged. In some examples, the conductive mass has a first portion with a positive charge and a second portion with a negative charge. In some examples, a first half of the conductive mass has a positive charge and a second half of the conductive mass has a negative charge.

In examples, the first node comprises a first conductive node. The second node may have a second conductive node. The first conductive node can be configured to have a first polarity. The second conductive node may be configured to have a second polarity. The second polarity may oppose the first polarity. In examples, the first conductive node and the second conductive node may be configured to have a same type of charge. The same type of charge may be a positive charge. The same type of charge may be a negative charge.

In examples, the system further comprises a first spring within the hollow tube. The first spring may be disposed within a cavity defined by a hollow tube and positioned between the conductive mass and the first node. The first spring may be disposed within a cavity defined by a hollow tube and positioned between the conductive mass and the second node. In examples, the system further comprises a second spring within the hollow tube. In this example, the first spring can be disposed within a cavity defined by a hollow tube and positioned between the conductive mass and the first node, and the second spring can be disposed within the cavity defined by the hollow tube and positioned between the conductive mass and the second node.

In examples, the system further comprises a portable computing device. The portable computing device can be at least one of a smartphone, a phablet, or a tablet. The portable computing device can have a touch-sensitive surface bonded to at least one of the first node or the second node. The touch-sensitive surface may be a touch-sensitive display. In examples, the haptic effect can be output without requiring the touch-sensitive surface to bend.

One example disclosed method comprises determining a location of a contact on a touch-sensitive surface. In this example, the method further comprises determining a node based on the location of the contact. The node may be bonded to a hollow tube. The hollow tube can define a cavity. A mass can be disposed within the cavity. In this example, the method further comprises energizing the node to output a haptic effect by causing the mass to move within the cavity.

The method may be modified in any suitable way as disclosed herein including, but not limited to, any one or more of the following. In examples, the node and the hollow tube each comprises a width between 5 microns and 3 millimeters and a length between 5 microns and 3 millimeters. In examples, the node comprises an electromagnetic node and the mass comprises a ferromagnetic mass. In some examples, the node comprises an electrostatic node and the mass comprises a conductive mass. In examples, the node is bonded to a first end of the hollow tube and a second node is bonded to a second end of the hollow tube, the second end opposite the first end, and wherein the node and the second node are simultaneously energized to output the haptic effect by causing the mass to move within the cavity. The node and a plurality of other nodes may be energized in a sequence to output the haptic effect. In such examples, the haptic effect comprises a wave haptic effect produced by energizing the node and the plurality of other nodes in the sequence, and the sequence comprises energizing the node, then energizing a second node that is adjacent to the node, and then energizing a third node that is adjacent to the second node. The sequence may further comprise deenergizing the node prior to energizing the second node and deenergizing the second node prior to energizing the third node.

These illustrative examples are mentioned not to limit or define the scope of this disclosure, but rather to provide examples to aid understanding thereof. Illustrative examples are discussed in the Detailed Description, which provides further description. Advantages offered by various examples may be further understood by examining this specification.

### BRIEF DESCRIPTION OF THE DRAWINGS

The accompanying drawings, which are incorporated into and constitute a part of this specification, illustrate one or more certain examples and, together with the description of the example, serve to explain the principles and implementations of the certain examples.
Figure 1A shows an example system for providing localized haptics using shifting masses according to an example.
Figure 1B shows an example system for providing localized haptics using shifting masses where several of the masses have moved according to an example.
Figure 1C shows a partial view of the example system in Figure 1A for providing localized haptics using shifting masses according to an example.
Figure 2 shows an example configuration for an electromagnetic node system according to an example.
Figure 3 shows an example configuration for an electromagnetic node system according to an example.
Figure 4 shows an example configuration for an electromagnetic node system according to an example.
Figure 5 shows an example configuration for an electromagnetic node system according to an example.
Figure 6 shows an example configuration for an electrostatic node system according to an example.
Figure 7 shows an example configuration for an electrostatic node system according to an example.
Figure 8 shows an example configuration for an electrostatic node system according to an example.
Figure 9 shows an example configuration for an electrostatic node system according to an example.
Figure 10 shows an example graph of acceleration versus damping according to an example.
Figure 11 shows an example graph of acceleration versus magnetic force according to an example.
Figure 12 shows an example method of outputting a localized haptic effect according to an example.

### DETAILED DESCRIPTION

Examples are described herein in the context of devices, systems, and methods for providing localized haptics using shifting masses. Those of ordinary skill in the art will realize that the following description is illustrative only and is not intended to be in any way limiting. Reference will now be made in detail to implementations of examples as illustrated in the accompanying drawings. The same reference indicators will be used throughout the drawings and the following description to refer to the same or like items.

In the interest of clarity, not all of the routine features of the examples described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

### Illustrative Example of Localized Haptics Using Shifting Masses

In one illustrative example, a smartphone has a touch-sensitive display. In this example, when a user contacts the touch-sensitive display at a particular location a haptic effect is output at the particular location. The haptic effect can be output by energizing nodes bonded to the touch-sensitive display at or near the particular location of the contact. Energizing the nodes causes masses to move within hollow tubes bonded to the nodes to output the haptic effect. The nodes and masses can be sized to provide greater precision of the haptic effect. For example, nodes can be smaller than a contact (such as a contact from a user's finger) such that multiple nodes correspond to the contact. In this example, only the nodes corresponding to a center of the contact can be determined and energized to provide a localized haptic effect to only the center of the contact.

In one illustrative example, a first plate comprising a first matrix of nodes is bonded to the touch-sensitive display. For example, the first plate can be bonded to an underside of the touch-sensitive display that faces away from a user of the smartphone and that is hidden by a cover or frame of the smartphone.

In this example, for each node in the first matrix of nodes, there is a corresponding hollow tube. For each node in the first matrix of nodes, a first end of a hollow tube can be bonded to the node. In this example, a second plate has a second matrix of nodes that mirrors the first matrix of nodes in the first plate. Thus, for each node in the second matrix of nodes in the second plate, there is a corresponding, mirroring node in the first matrix of nodes in the first plate and a corresponding hollow tube. The second plate can be bonded to the hollow tubes. For example, each node in the second matrix of nodes can be bonded to a second end of a hollow tube. The second end of the hollow tube can be opposite the first end of the hollow tube, which is bonded to a node in the first matrix of nodes in this example.

In this example, for each hollow tube, a mass (such as a ferromagnetic mass or a conductive mass) is in the hollow tube. Moreover, in this example, each of the hollow tubes is cylindrical and the mass within the hollow tube is spherical.

In one example, the first matrix of nodes in the first plate has electromagnetic coils, the second matrix of nodes in the second plate also has electromagnetic coils, and the masses in the hollow tubes are ferromagnetic masses. For example, each node in the first matrix of nodes may have an electromagnetic coil and each node in the second matrix of nodes may also have an electromagnetic coil.

In this example, an electric current is sent to a node in the first matrix of nodes in the first plate that corresponds to a location of a contact on the smartphone's touch-sensitive display. The electric current causes the electromagnetic coil in that node to produce an electromagnetic field. The electromagnetic field causes the ferromagnetic mass in the hollow tube corresponding to that node to move inside the hollow tube to output a haptic effect. An electric current can also be sent to the corresponding node in the second matrix of nodes in the second plate which causes the electromagnetic coil in that node to produce another electromagnetic field. This electromagnetic field also causes the ferromagnetic mass to move inside the hollow tube and can be used to, for example, create a more intensive haptic effect or to better control the movement of the ferromagnetic mass within the hollow tube.

In another example, the first matrix of nodes in the first plate is conductive, the second matrix of nodes in the second plate is also conductive, and the masses in the hollow tubes are conductive masses. For example, each node in the first matrix of nodes may have a conductive patch or region and each node in the second matrix of nodes may also have a conductive patch or region. Moreover, in this example, for each of the conductive masses, half of the conductive mass is positively charged and half of the conductive mass is negatively charged.

In this example, an electric current is sent to a first node in the first matrix of nodes in the first plate that corresponds to a location of a contact on the smartphone's touch-sensitive display as well as a corresponding second node in the second matrix of nodes in the second plate. In this example, the electric current causes both the first node and the second node to become positively charged. If the negatively charged half of the conductive mass in the hollow tube is facing the first node, then electrostatic forces (e.g., attraction from the first node and repulsion from the second node) cause the conductive mass to move within the hollow tube towards the first node to output a haptic effect. If an electric current is then sent to both the first node and the second node causing both the first node and the second node to become negatively charged, then electrostatic forces (e.g., repulsion from the first node and attraction from the second node) causes the conductive mass to move within the hollow tube towards the second node to output a haptic effect.

In some examples, a spring is disposed within a hollow tube between the mass and the corresponding node in the first matrix in the first plate and/or a spring is disposed within the hollow tube between the mass and the corresponding node in the second matrix in the second plate to provide additional control over the movement of the mass within the hollow tube.

This illustrative example is given to introduce the reader to the general subject matter discussed herein and the disclosure is not limited to this example. The following sections describe various additional non-limiting examples of providing localized haptics using shifting masses.

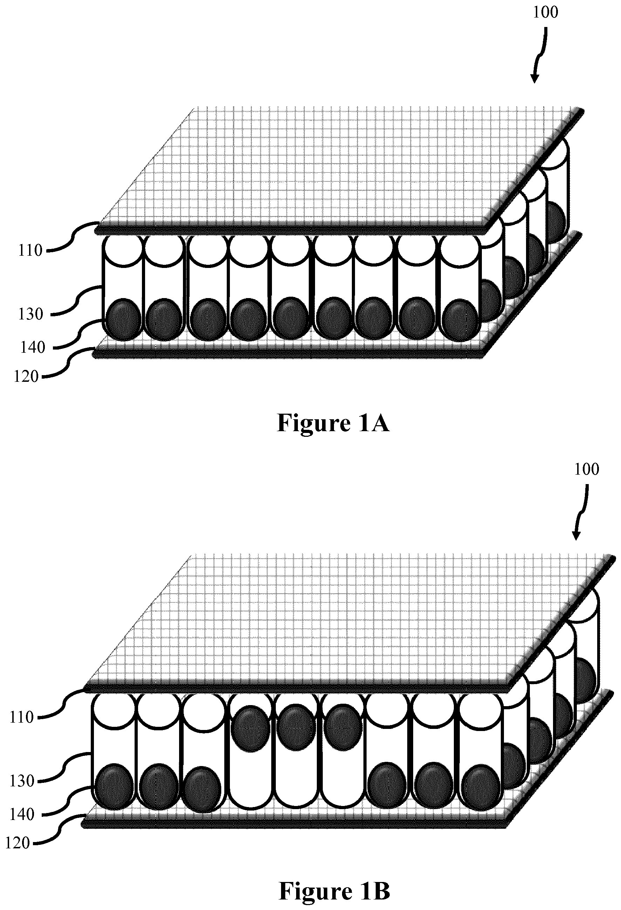

Referring now to Figures 1A-1C, these figures show a system 100 for outputting localized haptics using shifting masses according to one illustrative example. In various examples, the system can be an electromagnetic node system, an electrostatic node system, or both.

System 100 shown in Figures 1A-1C has a first plate 110 and a second plate 120. As shown in these figures, the first plate 110 has a first matrix of nodes (e.g., 110a, 110b, 110c, 110d, etc.) and the second plate 120 has a second matrix of nodes (e.g., 120a, 120b, 120c, 120d, etc.). In some examples, such as where system 100 is an electromagnetic node system, first plate 110 has one or more electromagnetic coils and/or second plate 120 has one or more electromagnetic coils.

In examples, nodes (e.g., 120a, 120b, 120c, 120d, etc.) in the second plate 120 mirrors the nodes (e.g., 110a, 110b, 110c, 110d, etc.) in the first plate 110 as shown in Figures 1A-C. Each node (e.g., 110a, 110b, 110c, 110d, etc.) in the first plate 110 and each node (e.g., 120a, 120b, 120c, 120d, etc.) in the second plate 120 has a length between 5 microns and 3 millimeters and a width between 5 microns and 3 millimeters. In some examples, each node in the first plate 110 and each node in the second plate 120 has a same length and a same width. In other examples, nodes in the first plate 110 and nodes in the second plate 120 can have varying lengths and/or varying widths. In various examples, one or more nodes in first plate 110 and one or more mirrored nodes in second plate 120 can have any number of shapes including, but not limited to, square, rectangular, circular, oblong, etc.

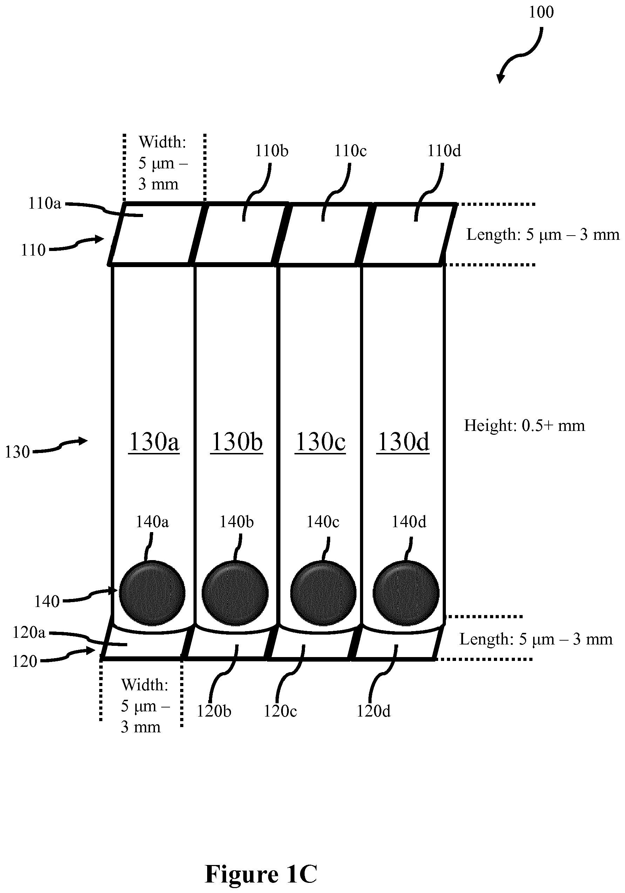

In examples, nodes in the first matrix of nodes are adjacent (e.g., abutting) to other nodes in the first matrix of nodes in the first plate 110 and nodes in the second matrix of nodes are adjacent (e.g., abutting) to other nodes in the second matrix of nodes in the second plate 120. For example, referring to Figure 1C, node 110c is adjacent (e.g., abutting) to at least node 110b and node 110d in the first matrix of nodes in first plate 110, and node 120c is adjacent (e.g., abutting) to at least node 120b and 120d in the second matrix of nodes in second plate 120. Thus, in examples, a node in a matrix of nodes physically contacts at least one other node in the matrix of nodes. In other examples, one or more nodes in first plate 110 is not adjacent (e.g., not abutting) to another node in first plate 110 and/or one or more nodes in second plate 120 is not adjacent (e.g., not abutting) to another node in second plate 120. For example, in an example, nodes can be spaced apart in first plate 110 and mirrored nodes can be spaced apart in second plate 120. Thus, in examples, a node in a matrix of nodes does not physically contact any other node in the matrix of nodes. In examples, a first node in a first plate can be considered to "mirror" a second node in a second plate if the first node and the second node are bonded to the same hollow tube (e.g., the first node can be bonded to a first end of the hollow tube and the second node can be bonded to a second end of the hollow tube opposite the first end) and the first node and the second node have a same shape, a same length, a same width, and are symmetrically aligned.

Referring to Figures 1A-1C, system 100 has a plurality of hollow tubes 130 and a plurality of masses 140 within hollow tubes 130. In this example, each node

(e.g., 110a, 110b, 110c, 110d, etc.) in the first plate 110 and the corresponding mirrored node (e.g., 120a, 120b, 120c, 120d, etc.) in the second plate 120 has a corresponding hollow tube (e.g., 130a, 130b, 130c, 130d, etc.) positioned between the node in first plate 110 and the mirrored node in second plate 120. For example, referring to Figure 1C, hollow tube 130a is positioned between node 110a in first plate 110 and node 120a in second plate 120. In examples, a second node in a second plate can be considered to "mirror" a first node in a first plate if the first node and the second node are bonded to the same hollow tube (e.g., the first node can be bonded to a first end of the hollow tube and the second node can be bonded to a second end of the hollow tube opposite the first end) and the first node and the second node have a same shape, a same length, a same width, and are symmetrically aligned.

In Figures 1A-1C, each hollow tube has a first end bonded to a node in first plate 110 and a second end bonded to a node in second plate 120. For example, referring to Figure 1C, a first end of hollow tube 130a is bonded to at least part of node 110a in first plate 110, and a second end of hollow tube 130a is bonded to at least part of node 120a in second plate 120. The first end of a hollow tube can be bonded to a node in a first plate and a second end of the hollow tube can be bonded to a node in a second plate in any suitable way. For example, an end of a hollow tube may be bonded to a node by gluing the end of the hollow tube to the node. In examples, an end of a hollow tube can be bonded to a node by soldering, welding, and/or forcing contact between the end of the hollow tube and the node.

A hollow tube can define a cavity between the first end of the hollow tube and the second end of the hollow tube. For example, referring to Figure 1C, hollow tube 130a defines a cavity between a first end of the hollow tube 130a bonded to node 110a and a second end of the hollow tube 130a bonded to node 120a. In this example, the cavity allows mass 140a to be moved within the hollow tube 130a.

In Figure 1C, node 110a has a square shape, node 120a also has a square shape that has a same width and a same length as node 110a, and the first end and second end of hollow tube 130a has a circular shape. Thus, in this example, the shape of nodes 110a and 120a differs from the shape of the first end and second end of hollow tube 130a. In other examples, a shape of the first end and second end of hollow tube 130a mirrors nodes 110a and 120a. For example, the first end of hollow tube 130a may have a same shape, a same length, and a same width as node 110a and the first end of hollow tube 130a may be symmetrically aligned with node 110a. In this example, the first end of hollow tube 130a can be considered to "mirror" the first node 110a. As another example, the second end of hollow tube 130b may have a same shape, a same length, and a same width as node 120a and the second of hollow tube 130a may be symmetrically aligned with node 120a. In this example, the second end of hollow tube 130a can be considered to "mirror" the second node 120a.

In Figures 1A-1C, each of the plurality of hollow tubes 130 has a same height. For example, each hollow tube may have a height of 4 mm. In Figures 1A-1C, each hollow tube (e.g., 130a, 130b, 130c, 130d, etc.) in the plurality of hollow tubes 130 has a height of at least 0.5 mm. In various examples, each hollow tube in the plurality of hollow tubes 130 has a height between 0.5 millimeters and 10 millimeters. Each hollow tube (e.g., 130a, 130b, 130c, 130d, etc.) can have a length between 5 microns and 3 millimeters and a width between 5 microns and 3 millimeters.

In some examples, one or more of the hollow tubes in the plurality of hollow tubes 130 has a same length and/or a same width as a corresponding node in the first plate 110 and/or a corresponding node in the second plate 120. For example, in an example, node 110b and node 120b each has a length of 10 microns and a width of 20 microns, and the first and second ends of hollow tube 130b also has a length of 10 microns and a width of 20 microns. In this example, hollow tube 130b mirrors node 110a and 120b. In various examples, the first end and/or the second end of a hollow tube can have any number of shapes, including but not limited to, square, rectangular, circular, oblong, etc. In various examples, a hollow tube may be any suitable shape such as a hollow cylinder, a hollow cuboid, etc.

Still referring to Figures 1A-1C, each hollow tube (e.g., 130a, 130b, 130c, 130d, etc.) has a corresponding mass (e.g., 140a, 140b, 140c, 140d, etc.) disposed within the hollow tube. For example, referring to Figure 1C, hollow tube 130a defines a cavity within hollow tube 130a that is positioned between node 110a in the first matrix of nodes in first plate 110 and node 120a in the second matrix of nodes in second plate 120. In this example, mass 140a is located within in the cavity of the hollow tube 130a hollow tube 130a and is movable within the cavity of hollow tube 130a. In other examples, one or more hollow tubes may not have a mass.

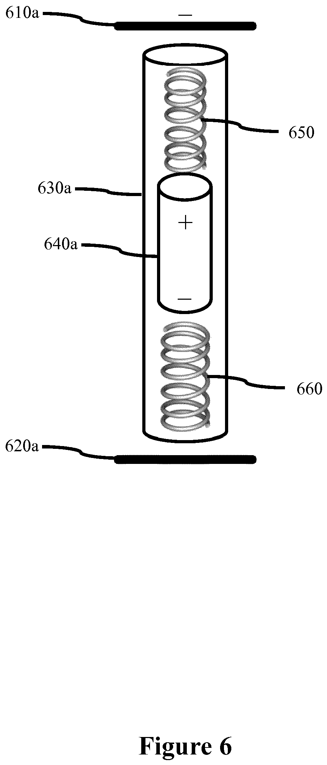

In some examples, a shape of a mass is a same shape as a corresponding hollow tube. For example, referring to Figure 6, hollow tube 130a and mass 140a both have a cylindrical shape and thus have a same shape. In other examples, a shape of a mass does not have a same shape as a corresponding hollow tube but complements the shape of the corresponding hollow tube. For example, referring to Figure 1C, mass 140d has a spherical shape, which complements the cylindrical shape of hollow tube 130d. In various examples, a mass can be any number of suitably shaped masses such as a spherical mass, a cylindrical mass, a cuboid mass, etc.

In examples, a node is an electromagnetic node or an electrostatic node. An electromagnetic node causes an electromagnetic field to be generated when an electrical current is applied to the node. In examples, the generated electromagnetic field at the electromagnetic node attracts a mass thereby causing the mass to move towards the electromagnetic node. In some example, the generated electromagnetic field at the electromagnetic node may repel a mass thereby causing the mass to move away from the electromagnetic node. An electrostatic node causes an electrostatic field to be generated when an electrical current is applied to the node. In examples, the generated electrostatic field at the electrostatic node attracts a mass thereby causing the mass to move towards the electrostatic node. In some example, the generated electrostatic field at the electrostatic node may repel a mass thereby causing the mass to move away from the electrostatic node.

Referring to Figure 1C, nodes 110a-110d and nodes 120a-120d may each be an electromagnetic node having an electromagnetic coil. As another example, nodes 110a-110d and nodes 120a-120d may each be an electrostatic node having a conductive region. As another example, nodes 110a-110d and nodes 120a-120d may each be an electrostatic node having a conductive patch bonded to the node. Any suitable conductive material can be used for the conductive region and/or the conductive patch such as silver, copper, gold, aluminum, zinc, lithium, tungsten, brass, other suitable materials, or a combination thereof. In some examples, some nodes are electromagnetic nodes and other nodes are electrostatic nodes. For example, referring to Figure 1C, nodes 110a, 110b, 120a, and 120b may be electromagnetic nodes and nodes 110c, 110d, 120c, and 120d may be electrostatic nodes.

In examples, a mass corresponds with a type of a node. For example, referring to Figure 1C, if node 110a is an electromagnetic node, then mass 140a in hollow tube 130a may be a ferromagnetic mass. In various examples, a ferromagnetic mass has one or more ferromagnetic materials such as cobalt, iron, ferric oxide, ferrous ferric oxide, manganese, nickel, yttrium iron garnet, chromium dioxide, gadolinium, terbium, dysprosium, another suitable material, or a combination thereof. As another example, if node 110b is an electrostatic node, then mass 140b in hollow tube 130b can be a conductive mass. In various examples, a conductive mass is made of silver, copper, gold, aluminum, zinc, lithium, tungsten, brass, other suitable materials, or a combination thereof.

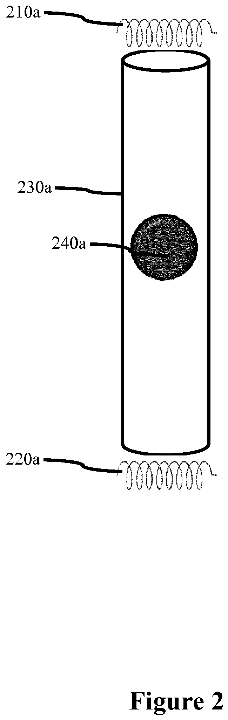

In examples, a mass is movable within a corresponding hollow tube when a corresponding node is energized and/or de-energized. For example, referring to Figure 1C, in an example mass 140b moves towards node 110b when node 110b is energized by providing an electric current to node 110b. In this example, mass 140b can move towards node 110b at a greater velocity if node 120b is simultaneously energized by proving an electric current to node 120b to repel the mass 140b towards node 110b. Other examples are described herein. For example, as discussed in more detail below, Figures 2-5 illustrate example configurations for a node in first plate and a corresponding node in a second plate where the nodes are electromagnetic nodes, and Figures 6-9 illustrate example configurations for a node in a first plate and a corresponding node in a second plate where the nodes are electrostatic nodes.

Referring to Figures 1A-1C, in examples, at least part of first plate 110 is bonded to a touch-sensitive surface of a portable computing device. The touch-sensitive surface may be a touch-sensitive display or a non-display surface with a touch-sensitive layer or layers. The portable computing device can be any suitable portable electronic device having a touch-sensitive surface such as a smartphone, a phablet, a tablet, an e-reader, a laptop, etc.

In various examples, haptics can be output to a desired area of a touch-sensitive surface, such as a touch-sensitive display, with accurate precision by causing masses within a desired area to move within hollow tubes using electromagnetics and/or electrostatics. For example, a wave haptic effect can be output by sequentially energizing nodes in a matrix from one side to another side thereby causing masses within corresponding hollow tubes to sequentially move within the hollow tubes.

A wave haptic effect refers to sequentially providing vibrations across a surface. In an example, referring to Figure 1C, a wave haptic effect can be output by energizing node 110a which causes a first vibration to be output as mass 140a moves towards node 110a, then energizing node 110b which causes a second vibration to be output as mass 140b moves towards node 110b, and then energizing node 110c which causes a third vibration to be output as mass 140c moves towards node 110c. As another example, referring to Figure 1C, a wave haptic effect can be output by energizing node 110a and then deenergizing node 110a which causes a first vibration to be output as mass 140a moves towards node 110a and then moves away from node 110a, then energizing node 110b and then deenergizing node 110b which causes a second vibration to be output as mass 140b moves towards node 110b and then away from node 110b, and then energizing node 110c and then deenergizing node 110c which causes a third vibration to be output as mass 140c moves towards node 110c and then moves away from node 110c.

Rather than always having a haptic effect output to the same location, in various examples a haptic effect can originate in any number of nodes in the matrix of nodes thus providing greater flexibility in outputting haptic effects. In examples, a haptic effect is output on a touch-sensitive surface, such as a touch-sensitive display, without requiring the touch-sensitive surface to bend because using localized multiple shifting masses as described herein may not bend the touch-sensitive surface when outputting the haptic effect.

In examples, when a user contacts a location of a touch-sensitive surface, such as a touch-sensitive display, that is bonded to a first plate having a first matrix of nodes, electrical current(s) can be provided to one or more nodes in the first matrix of nodes corresponding to the location of the contact. In examples, the electrical current(s) cause the node(s) to generate an electromagnetic field to cause the mass(es) within the corresponding hollow tube(s) to move, thereby causing a localized haptic effect to be output. In some examples, electrical current(s) to one or more node(s) in the first matrix of nodes are stopped which can cause the node(s) to, for example, cease generating an electromagnetic field, thereby causing the mass(es) within the corresponding hollow tube(s) to move within the corresponding hollow tube(s).

For example, referring to Figure 1C, if a user contacts a location of a touch-sensitive surface corresponding to node 110a, then an electrical current can be provided to node 110a to energize node 110a which, in examples, causes an electromagnetic field to be generated which attracts mass 140a and causes mass 140a to move towards node 110a. The movement of mass 140a can cause a localized haptic effect to be output. The electrical current to node 110a can then be stopped to deenergize node 110a which, in examples, causes the electromagnetic field to stop being generated such that mass 140a is no longer attracted to node 110a and thus the mass 140a moves away from node 110a and towards node 120a because of gravity.

In some examples, electrical current(s) are also provided to one or more additional node(s) in a second plate. These additional node(s) in the second plate may mirror the node(s) in the first plate. For example, electrical current(s) can be provided to node(s) in the second matrix that mirror the node(s) in the first matrix to which electrical current(s) are provided. In examples, the electrical current(s) provided to the node(s) in the second matrix cause the node(s) to generate an electromagnetic field to cause the mass(es) within corresponding hollow tube(s) to move, thereby causing a localized haptic effect to be output. In some examples, electrical current(s) to one or more node(s) in the second matrix of nodes are stopped which causes the node(s) to, for example, cease generating an electromagnetic field. In some examples, when the generation of electromagnetic field ceases, the mass(es) within the corresponding hollow tube(s) to move within the corresponding hollow tube(s).

For example, referring to Figure 1C, if a user contacts a location of a touch-sensitive surface corresponding to node 110a, then an electrical current can be provided to node 120a to energize node 120a which, in examples, causes an electromagnetic field to be generated which repels mass 140a and causes mass 140a to move towards node 110a. The movement of mass 140a can cause a localized haptic effect to be output. In examples, if an electric current is provided to node 110a to cause an electromagnetic field that attracts mass 140a and an electric current is simultaneous provided to node 120a to cause another electromagnetic field that repels mass 140a, then the velocity of the movement of mass 140a can be increased thereby causing a localized haptic effect with greater intensity.

As another example, referring to Figure 1C, if a user contacts a location of a touch-sensitive surface corresponding to node 110a, then an electrical current can be provided to node 110a to energize node 110a which, in examples, causes an electromagnetic field to be generated which attracts mass 140a and causes mass 140a to move towards node 110a. In this example, an electrical current can then be provided to node 120a to energize node 120a which, in examples, causes an electromagnetic field to be generated which attracts mass 140a and causes mass 140 to move towards node 120a. In this example, if both node 110a are energized node 120a, then mass 140a may move to a location between node 110a and node 120a. For example, the mass 140a may move to the middle of hollow tube 130a. Moreover, in this example, if node 110a is then deenergized by stopping the electrical current to node 110a, the electromagnetic field for node 110a can stop being generated which can cause mass 140a to move further towards node 120a because mass 140a is no longer attracted to node 110a.

In various examples, node(s) in the first matrix of nodes and node(s) in the second matrix of nodes are simultaneously energized or de-energized to output a haptic effect. For example, electrical current(s) can be simultaneously provided to a first node in the first matrix of nodes and a corresponding node in the second matrix of nodes to energize the first node and the mirroring node to output a haptic effect. As another example, electrical current(s) to a first node in the first matrix of nodes and a mirroring node in the second matrix of nodes can be simultaneously stopped to de-energize the first node and the mirroring node to output a haptic effect.

In examples, node(s) in the first matrix of nodes and node(s) in the second matrix of nodes are not simultaneously energized or de-energized to output a haptic effect. For example, a first electrical current can be provided to a first node in the first matrix of nodes to energize the first node and, after the first electrical current has been provided to the first node, a second electrical current can be provided to a mirroring node in the second matrix of nodes to energize the mirroring node (or vice versa) to output a haptic effect. As another example, a first electrical current to a first node in the first matrix of nodes can be stopped to de-energize the first node and, after the first electrical current to the first node has been stopped, a second electrical current to a mirroring node in the second matrix of nodes can be stopped to de-energize the mirroring node (or vice versa) to output a haptic effect.

In examples, node(s) in the first matrix of nodes are energized and/or de-energized and node(s) in the second matrix of nodes are energized and/or de-energized. For example, a first node in the first matrix of nodes can be energized and a mirroring node in the second matrix of nodes can be simultaneously de-energized (or vice versa) to output a haptic effect. As another example, a first node in the first matrix of nodes and a mirroring node in the second matrix of nodes can be simultaneously energized and then, after a predetermined time, are simultaneously de-energized (or vice versa) to output a haptic effect. As yet another example, a first node in the first matrix of nodes can be energized, then a mirroring node in the second matrix of nodes can be energized, then the first node can be de-energized, then the mirroring node can be de-energized to move the mass within the hollow tube to output a haptic effect. As yet another example, a first node in a first matrix of nodes can be energized, then a mirroring node in the second matrix of nodes can be de-energized, then the mirroring node can be energized, then the first node can be de-energized.

Any desired sequence of node activation and/or node deactivation can be used to output various haptic effects. For example, in an example, a wave haptic effect is output by sequentially energizing nodes in the first matrix of nodes from one side to another side. In some examples, mirroring nodes in the second matrix of nodes are energized simultaneously with the nodes in the first matrix to output a wave haptic effect.

In examples, node(s) in the first matrix of nodes and/or node(s) in the second matrix of nodes can be simultaneously and/or non-simultaneously, e.g., sequentially, energized and/or de-energized to move mass(es) within the hollow tube(s) to output a haptic effect. For example, a first node in the first matrix of nodes and a second node in the first matrix of nodes can be simultaneously energized. As another example, a first node in the first matrix of nodes can be energized and then a second node in the first matrix of nodes can be energized. In some examples, a first node in the second matrix of nodes and a second node in the second matrix of nodes are simultaneously energized. As another example, a first node in the second matrix of nodes can be energized and then a second node in the second matrix of nodes can be energized. As yet another example, a first node in the first matrix of nodes can be energized simultaneously with a mirroring node in the second matrix of nodes. In another example, a first node in the second matrix of nodes is energized simultaneously with a mirroring node in the first matrix of nodes.

In examples, node(s) in the first matrix of nodes and/or node(s) in the second matrix of nodes can be energized and/or de-energized in a particular sequence to move masses within the hollow tubes to output a particular haptic effect. In examples, node(s) in the first matrix of nodes and/or node(s) in the second matrix of nodes can be energized with one or more intensities to move masses within the hollow tubes to output a haptic effect. For example, in an example, if a user contacts a particular area of a touch-sensitive display, then nodes corresponding to a middle of the contact can be energized with a greater intensity than nodes corresponding to an edge of the contact. In this example, the masses in the hollow tubes corresponding to the nodes at the middle of the contact move within the hollow tubes at a greater velocity than the masses in the hollow tubes corresponding to the nodes at the edge of the contact. Thus, haptics are output at a greater magnitude at the middle of the contact than at the edge of the contact. Such haptic output may, for example, provide a button-like feeling to a user.

In an example, simultaneously energizing a first node in a first matrix of nodes and a mirroring node in a second matrix of nodes causes the mass within the corresponding hollow tube to move at a greater velocity than if only the first node is energized thus causing a more intense haptic effect to be output. In some examples, multiple nodes in the first matrix of nodes in the first plate and/or multiple nodes in the second matrix of nodes in the second plate are simultaneously energized. In examples, nodes in the first matrix of nodes and/or nodes in the second matrix of nodes are energized in a pattern to output a haptic effect.

In examples, node(s) in the first matrix of nodes and/or node(s) in the second matrix of nodes can be energized and/or de-energized to apply active braking to the mass. For example, in an example, an electromagnetic node in the first matrix of nodes is simultaneously energized with a same intensity as a mirroring electromagnetic node in the second matrix of nodes to place the mass in the corresponding hollow tube in an idle position. In this example, the idle position may be a center of the hollow tube. In other examples, the electromagnetic node and the mirroring electromagnetic node are energized at varying intensities to place the mass in the corresponding hollow tube in an idle position at particular locations within the hollow tube. As another example, in an example where half the mass is positively charged and half the mass is negatively charged, an electrostatic node in the first matrix of nodes is simultaneously energized with an opposing charge as a mirroring electrostatic node in the second matrix of nodes to place the mass within the corresponding hollow tube in a center of the hollow tube.

Referring now to Figures 2-5, these figures show example configurations for electromagnetic node systems for providing localized haptics using shifting masses according to various examples. These configurations can be used, for example, for one or more of the nodes in the first plate, hollow tubes, nodes in the second plate, and masses shown in Figures 1A-1C where at least part of system 100 is an electromagnetic system.

In Figures 2-5, a first node (210a, 310a, 410a, and 510a, respectively) and a second node (220a, 320a, 430a, and 530a, respectively) are electromagnetic. The first node (210a, 310a, 410a, 510a) has a first electromagnetic coil and the second node (220a, 320a, 430a, 530a) has a second electromagnetic coil. In some examples, the first node (210a, 310a, 410a, 510a) is not electromagnetic and/or second node (220a, 320a, 420a, 520a) is electromagnetic. In other examples, the first node (210a, 310a, 410a, 5l0a) is electromagnetic and/or second node (220a, 320a, 420a, 520a) is not electromagnetic. In some examples, the first node 210a, 310a, 410a, 510a) and/or second node (220a, 320a, 420a, 520a) does not have an electromagnetic coil. In examples where a node is not electromagnetic and thus the node does not have an electromagnetic coil, the node can be an electrostatic node.

In the examples shown in Figures 2-5, a mass (240a, 340a, 440a, and 540, respectively) is a ferromagnetic mass and is disposed within a hollow tube (230a, 330a, 430a, and 530a, respectively). In these examples, the ferromagnetic mass (240, 340, 440, 540) can be moved within hollow tube the (230a, 330a, 430a, 530a) by applying an electrical current to the first electromagnetic coil in the first node (210a, 310a, 410a, 510a) and/or by applying an electrical current to the second electromagnetic coil in the second node (220a, 320a, 420a, 520a). In the examples shown in Figures 2-5, the ferromagnetic mass (240a, 340a, 440a, 540a) has a spherical shape. In other examples, a ferromagnetic mass may be another suitable shape such as a cylindrical shape or a cuboid shape.

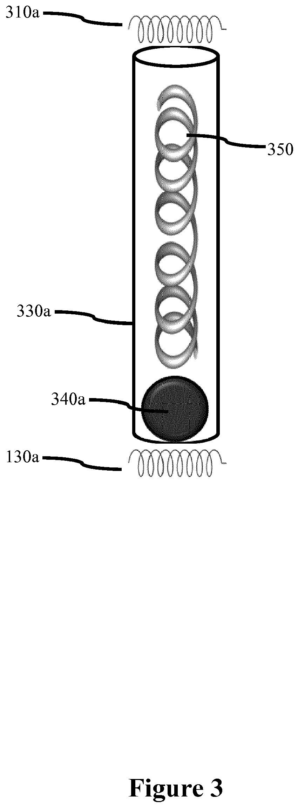

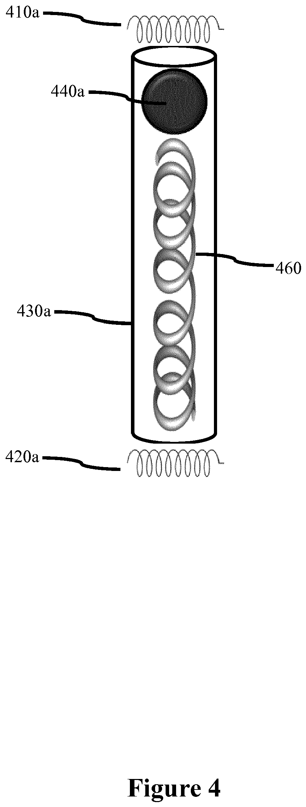

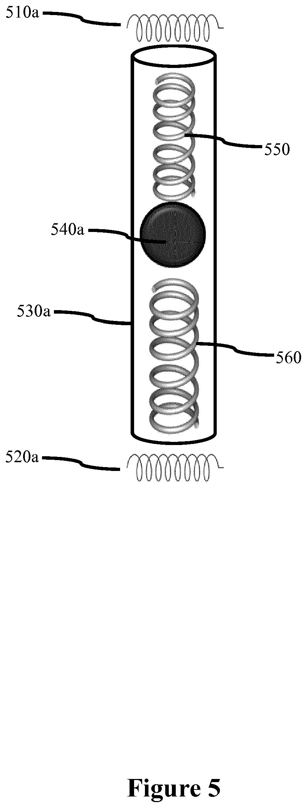

In Figure 2, there are no springs in hollow tube 230a. In Figure 3, spring 350 is disposed within hollow tube 330a between ferromagnetic mass 340a and node 310a, and there is no spring between ferromagnetic mass 340a and node 320a. In Figure 4, there is no spring between ferromagnetic mass 440a and node 410a, and spring 460 is disposed within hollow tube 430a between ferromagnetic mass 440a and node 420a. In Figure 5, spring 550 is disposed within hollow tube 530a between ferromagnetic mass 540a and node 510a, and spring 560 is disposed within hollow tube 530a between ferromagnetic mass 540a and node 520a. Spring 550 and/or spring 560 provide additional control over the movement of ferromagnetic mass 540a within hollow tube 530a.

Referring now to Figures 6-9, these figures show example configurations for electrostatic node systems for providing localized haptics using shifting masses according to various examples. These configurations can be used, for example, for one or more of the nodes in the first plate, hollow tubes, nodes in the second plate, and masses shown in Figures 1A-1C where at least part of system 100 is an electrostatic system.

In Figures 6-9, a first node (610a, 710a, 810a, and 910a, respectively) and a second node (620a, 720a, 820a, and 920a, respectively) are conductive. In an example, the first node (610a, 710a, 810a, 910a) has a first conductive region and/or the second node (620a, 720a, 820a, 920a) has a second conductive region. In another example, a first conductive patch is bonded to the first node (610a, 710a, 810a, 910a) and/or a second conductive patch is bonded to the second node (620a, 720a, 820a, 920a). In some examples, the first node (610a, 710a, 810a, 910a) is not conductive and the second node (620a, 720a, 820a, 920a) is conductive. In other examples, the first node (610a, 710a, 810a, 910a) is conductive and the second node (620a, 720a, 820a, 920a) is not conductive. In examples where a node is not an electrostatic node and thus is not conductive, the node may be an electromagnetic node.

In the examples shown in Figures 6-9, a mass (640a, 740a, 840a, and 940a, respectively) is a conductive mass. In these examples, a first spring (650, 750, 850, and 950, respectively) is disposed within a hollow tube (630a, 730a, 830a, and 930a, respectively) between the first node (610a, 710a, 810a, 910a) and the conductive mass (640a, 740a, 840a, 940a), and a second spring (660, 760, 860, and 960, respectively) is disposed within the hollow tube (630a, 730a, 830a, 930a) between the conductive mass (640a, 740a, 840a, 940a) and the second node (620a, 720a, 820a, 920a). The first spring (650, 750, 850, 950) and the second spring (660, 760, 860, 960) provide additional control over movements of the conductive mass (640a, 740a, 840a, 940a). In other examples, the first spring (650, 750, 850, 950) and/or the second spring (660, 760, 860, 960) is optional. In the examples shown in Figures 6-9, the conductive mass (640a, 740a, 840a, 940a) has a cylindrical shape. In other examples, a conductive mass may be another suitable shape such as a spherical shape or a cuboid shape.

In Figure 6, a first portion of conductive mass 640a is positively charged and a second portion of conductive mass 640a is negatively charged. For example, in Figure 6, a first half of conductive mass 640a that faces node 610a is positively charged and a second half of conductive mass 640a that faces node 620a is negatively charged. In this example, when node 610a is negatively charged and node 620a is not charged as shown in Figure 6, then conductive mass 640a in hollow tube 630a moves towards node 610a. In another example where conductive mass 640a and node 610a are the same as shown in Figure 6 but node 620a is positively charged, conductive mass 640a maintains an idle position within hollow tube 630a.

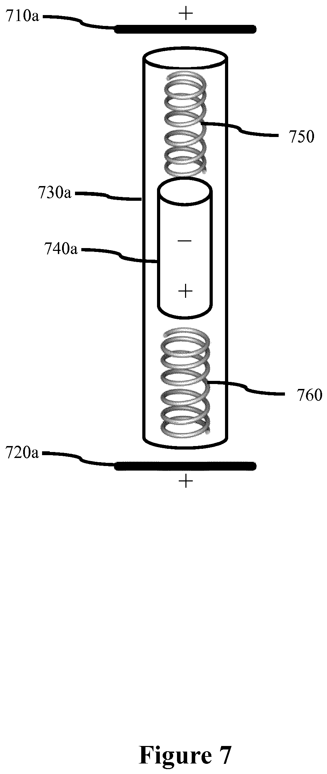

In Figure 7, a first portion of conductive mass 740a is negatively charged and a second portion of conductive mass 740a is positively charged. For example, in Figure 7, a first half of conductive mass 740a that faces node 710a is negatively charged and a second half of conductive mass 740a that faces node 720a is positively charged. In this example, when node 710a is positively charged and node 720a is positively charged as shown in Figure 7, then conductive mass 740a in hollow tube 730a moves towards node 710a and away from node 720a. In the example shown in Figure 7, if node 710a is changed to be negatively charged, then conductive mass 740a maintains an idle position within hollow tube 730a.

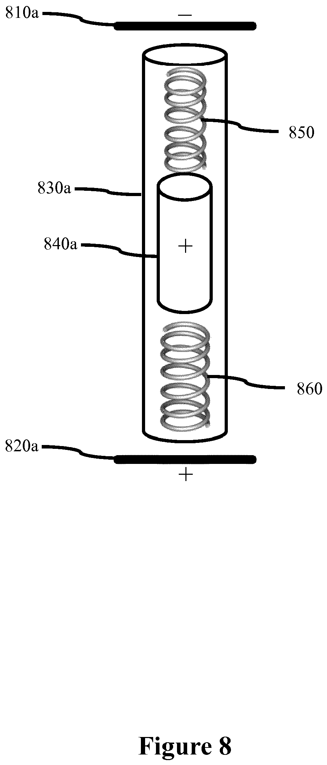

In Figure 8, the entire conductive mass 840a is positively charged. In this example, when node 810a is negatively charged and node 820a is positively charged as shown in Figure 8, then conductive mass 840a in hollow tube 830a moves towards node 810a and away from node 820a. In the example shown in Figure 8, if node 810a is changed to be positively charged or if node 820a is changed to be negatively charged, then conductive mass 840a maintains an idle position within hollow tube 830a.

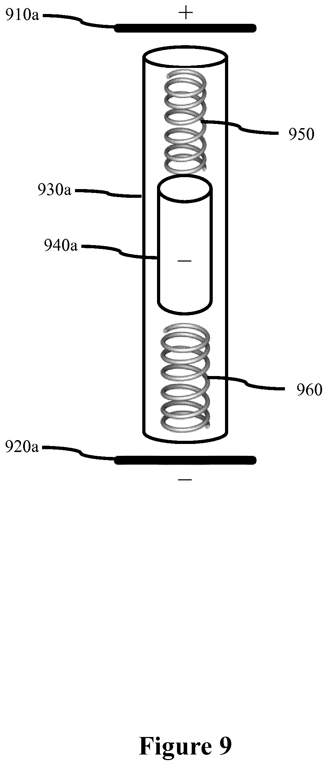

In Figure 9, the entire conductive mass 940a is negatively charged. In this example, when node 910a is positively charged and node 920a is negatively charged as shown in Figure 9, then conductive mass 940a moves towards node 910a and away from node 920a. In the example shown in Figure 9, if node 910a is changed to be negatively charged or if node 920a is changed to be positively charged, then conductive mass 940a maintains an idle positon within hollow tube 930a.

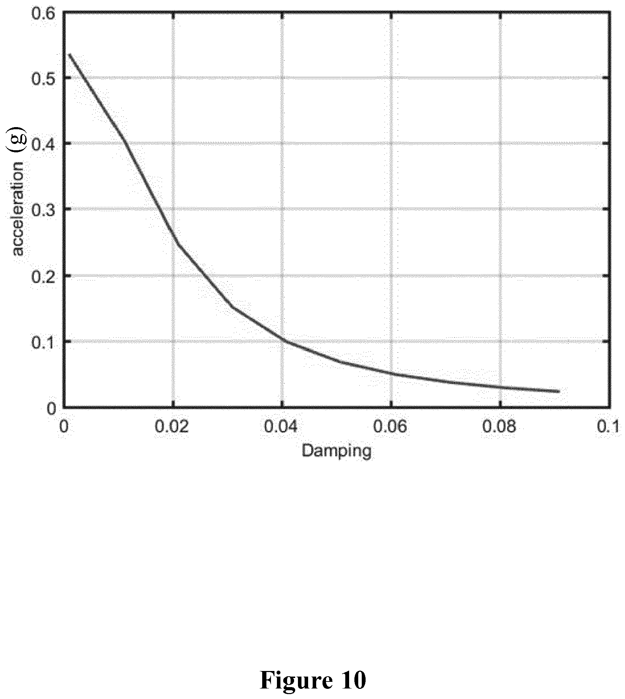

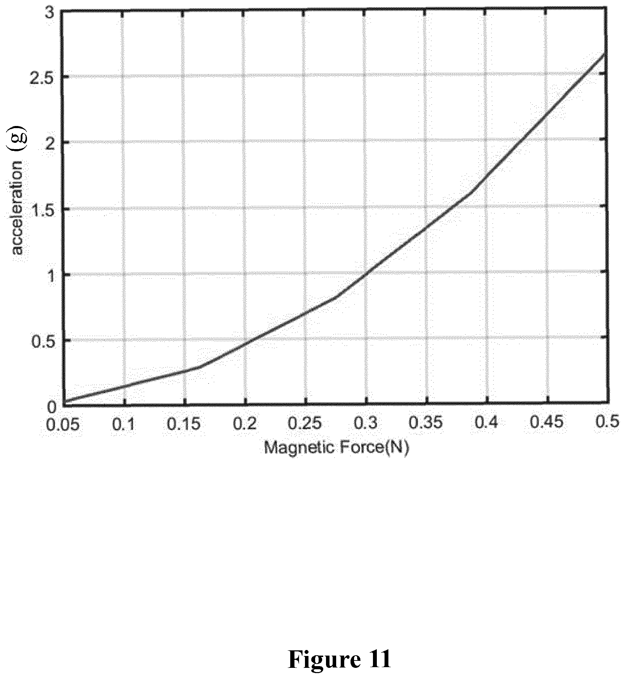

Referring now to Figure 10 and Figure 11, these graphs were created using a configuration as shown in Figure 5 with the ferromagnetic mass being a 100 um ferromagnetic ball and the springs having a 0.5 N/m spring constant. Figure 10 shows a graph of acceleration (g) versus damping and Figure 11 shows a graph of acceleration (g) versus magnetic force (N) in this example.

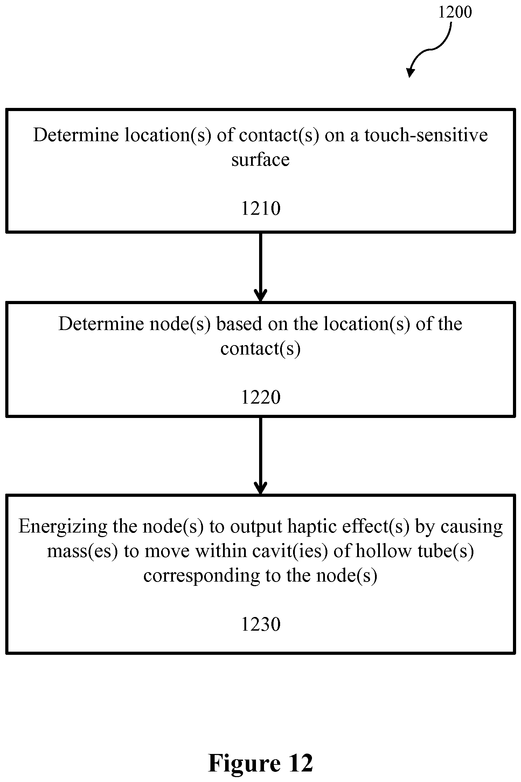

Referring now to Figure 12, this figure shows an example method 1200 of outputting a localized haptic effect according to an example. Method 1200 can be performed by a computing device disclosed herein. In some examples, method 1200 can be performed by a portable computing device (such as having a smartphone, a phablet, a tablet, an e-reader, a laptop, etc.). In some examples, a processor in such devices performs method 1200. Such devices may have touch-sensitive surface(s), node(s), hollow tube(s), and mass(es) as discussed herein.

Method 1200 begins in block 1210 by determining location(s) of contact(s) on a touch-sensitive surface in a portable computing device. For example, if a user contacts the touch-sensitive surface at a center of the touch-sensitive surface, then the center of the touch-sensitive surface may be determined. As another example, if a user contacts the touch-sensitive surface with three fingers, then three locations corresponding to the contacts can be determined (e.g., one location for each finger contacting the touch-sensitive surface). A location of contact on a touch-sensitive surface can be determined in other ways any suitable way, some of which are described herein.

In block 1220, node(s) based on the location(s) of the contact(s) are determined. A node can be one or more of the nodes described herein, such as with respect to Figures 1A-1C and 2-9.

A node at a same location as a determined location can be determined. For example, referring to Figure 1C, if node 110c is bonded to the touch-sensitive surface at the same location as a user's contact on the touch-sensitive surface, then node 110c may be determined. In examples, if a contact on the touch-sensitive surface covers locations corresponding to multiple nodes, then all or some of the nodes can be determined. For example, referring to Figure 1C, if a contact on the touch-sensitive surface covers locations corresponding to nodes 110a, 110b, 110c, and 110d, then these nodes can be determined. As another example, still referring to Figure 1C, if a contact on the touch-sensitive surface covers locations corresponding to nodes 110a, 110b, 110c, and 110d, then nodes 110b and 110c may be determined. In this example, nodes corresponding to a center of the location of the contact are determined. Thus, in examples, nodes corresponding to part of a location of a contact (e.g., nodes corresponding to a center of a contact, nodes corresponding to an edge of a contact, etc.) can be determined.

In some examples, a node is determined that does not directly correspond to a location of a contact. For example, referring to Figure 1C, if a contact on the touch-sensitive surface covers locations corresponding to nodes 110a and 110b but does not correspond to nodes 110c and 110d, then node 110c may be determined. Thus, a node may be determined that that is near the location of a contact but that does not directly correspond to the location of the contact.

In examples, node(s) from a first plate and node(s) from a second plate are determined. For example, referring to Figure 1C, in one example, node 110c and node 120c may be determined. As another example, nodes 110b, 110c, 120b, and 120c may be determined. As yet another example, nodes 110b, 110c, 120c, and 120d may be determined. In some examples, only node(s) from a first plate is determined. In other examples, only node(s) from a second plate is determined. In yet other examples, node(s) from a first plate and node(s) from a second plate are determined. Node(s) may be determined in other ways described herein.

In block 1230, the node(s) are energized. For example, referring to Figure 1C, if node 110d is determined in block 1220, then node 110d may be energized. As another example, if nodes 110d and 120d are determined in block 120, then nodes 110d and 120d may be simultaneously energized. In other examples, nodes 110d and 120d may be non-simultaneously energized. As yet another example, if nodes 110c and 110d are determined in block 1220, then nodes 110c and 110d can be simultaneously energized. In other examples, nodes 110c and 110d may be non-simultaneously energized. For example, node 110c may be energized and then node 110c may be energized.

Energizing the node(s) can cause a haptic effect to be output by moving mass(es) within the hollow tube(s). For example, referring to Figure 1C, if node 110d is energized, then mass 140d can move within hollow tube 130d to output a haptic effect. As another example, if nodes 110d and 120d are simultaneously energized, then mass 140d may move within hollow tube 130d to output a haptic effect. In another example, node 110d may be energized to move mass 140d within hollow tube 130d towards node 110d and then node 120d may be energized to move mass 140d within hollow tube 130d toward node 120d.

As yet another example, if nodes 110c and 110d are simultaneously energized, then masses 140c and 140d may simultaneously move within hollow tubes 130c and 130d, respectively, to output a haptic effect. In one example, where node 110c is energized and then node 110d is energized, then mass 140c may move within hollow tube 130c and then mass 140d may move within hollow tube 130d. In this example, mass 140c may stop moving before node 110d is energized to move mass 140d. In other examples, node 110d may be energized while mass 140c is still moving within hollow tube 130c such that mass 140d begins moving while mass 140c is still moving as part of outputting a haptic effect.

In examples, nodes can be energized in a particular sequence. For example, referring to Figure 1C, node 110a may be energized, then node 110b may be energized, then node 110c may be energized, and then node 110d may be energized. Such a sequence may be used to output a wave haptic effect in some examples. As another example, still referring to Figure 1C, nodes 110a and 120a may be energized, then nodes 110b and 120b may be energized, then nodes 110c and 120c may be energized, and then nodes 110d and 120d may be energized. Such a sequence may be used to output a wave haptic effect in some examples. In another example, nodes 110a and 110b may be energized and then nodes 110c and 110d may be energized to output a haptic effect. Node(s) may be energized in other ways described herein.

While some examples of devices, systems, and methods herein are described in terms of software executing on various machines, the methods and systems may also be implemented as specifically-configured hardware, such as field-programmable gate array (FPGA) specifically to execute the various methods. For example, examples can be implemented in digital electronic circuitry, or in computer hardware, firmware, software, or in a combination thereof. In one example, a device may include a processor or processors. The processor comprises a computer-readable medium, such as a random access memory (RAM) coupled to the processor. The processor executes computer-executable program instructions stored in memory, such as executing one or more computer programs for editing an image. Such processors may comprise a microprocessor, a digital signal processor (DSP), an application-specific integrated circuit (ASIC), field programmable gate arrays (FPGAs), and state machines. Such processors may further comprise programmable computing devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example computer-readable storage media, that may store instructions that, when executed by the processor, can cause the processor to perform the steps described herein as carried out, or assisted, by a processor. Examples of computer-readable media may include, but are not limited to, an electronic, optical, magnetic, or other storage device capable of providing a processor with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code for carrying out one or more of the methods (or parts of methods) described herein.

Examples of methods disclosed herein may be performed in the operation of such computing devices. The order of the blocks presented in the examples above can be varied-for example, blocks can be re-ordered, combined, and/or broken into sub-blocks. Certain blocks or processes can be performed in parallel. Thus, while the steps of methods disclosed herein have been shown and described in a particular order, other examples may comprise the same, additional, or fewer steps. Some examples may perform the steps in a different order or in parallel.

The foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the spirit and scope of the disclosure.

Reference herein to an example or implementation means that a particular feature, structure, operation, or other characteristic described in connection with the example may be included in at least one implementation of the disclosure. The disclosure is not restricted to the particular examples or implementations described as such. The appearance of the phrases "in one example," "in an example," "in one implementation," or "in an implementation," or variations of the same in various places in the specification does not necessarily refer to the same example or implementation. Any particular feature, structure, operation, or other characteristic described in this specification in relation to one example or implementation may be combined with other features, structures, operations, or other characteristics described in respect of any other example or implementation.

## Claims

1. A system (100) comprising:
a hollow tube (130a, 530a, 630a) comprising a first end and a second end opposite the first end, the hollow tube (130a, 530a, 630a) defining a cavity between the first end and the second end;
a first node (110a, 510a, 610a) corresponding to the first end;
a second node (120a, 520a, 620a) corresponding to the second end;
a mass (140a, 540a, 640) disposed within the cavity; and
wherein the mass (140a, 540a, 640) is movable within the cavity and at least one of the first node (110a, 510a, 610a) or the second node (120a, 520a, 620a) is configured to move the mass (140a, 540a, 640) within the cavity to output a haptic effect when an electrical current is provided to the at least one of the first node (110a, 510a, 610a) or the second node (120a, 520a, 620a).

2. The system of claim 1, wherein the first node (110a, 510a, 610a) comprises a width between 5 microns and 3 millimeters and a length between 5 microns and 3 millimeters; and optionally wherein the second node (120a, 520a, 620a) mirrors the first node (110a, 510a, 610a).

3. The system of claim 1 or claim 2, wherein the hollow tube (130a, 530a, 630a) comprises a height between the first end and the second end of at least 0.5 millimeters.

4. The system of any preceding claim,
wherein the hollow tube (130a, 530a, 630a) comprises a hollow cylinder and the mass (140a, 540a, 640a) comprises at least one of a spherical mass or a cylindrical mass, or
wherein the hollow tube (130a, 530a, 630a) comprises a hollow cuboid and the mass (140a, 540a, 640a) comprises a cuboid mass.

5. The system of any preceding claim, wherein the mass (140a, 540a) comprises a ferromagnetic mass, and wherein the first node (110a, 510a) comprises a first electromagnetic coil and the second node (120a, 520a) comprises a second electromagnetic coil; or
wherein the mass (140a, 640a) comprises a conductive mass, and wherein the first node (110a, 610a) comprises a first conductive node and the second node (120a, 620a) comprises a second conductive node, and optionally wherein the conductive mass (140a, 640a) comprises a first portion with a positive charge and a second portion with a negative charge.

6. The system of any preceding claim, further comprising a first spring (550, 650) disposed within the cavity and positioned between the mass (540a, 640a) and at least one of the first node (510a, 610a) or the second node (520a, 620a).

7. The system of claim 6, further comprising a second spring (560, 660) disposed within the cavity,
wherein the first spring (550, 650) is positioned between the mass (540a, 640a) and the first node (510a, 610a), and
wherein the second spring is positioned between the mass (540a, 640a) and the second node (520a, 620a).

8. The system of any preceding claim, wherein the electrical current is simultaneously provided to the first node (510a, 610a) and the second node (520a, 620a) to move the mass within the cavity to output the haptic effect.

9. The system of any preceding claim, further comprising:
a portable computing device comprising a touch-sensitive surface bonded to at least one of the first node (510a, 610a) or the second node (520a, 620a), the portable computing device comprising at least one of a smartphone, a phablet, or a tablet.

10. The system of claim 1, further comprising:
a first plate (110) comprising a first matrix of nodes (110a, 110b, 110c) including the first node;
a second plate (120) comprising a second matrix of nodes (120a, 120b, 120c) including the second node;
a plurality of hollow tubes (130a, 130b, 130c) including the hollow tube (130a), each hollow tube in the plurality of hollow tubes corresponding to one node in the first matrix of nodes and one node in the second matrix of nodes; and
a plurality of masses (140a, 140b, 140c) including the mass (140a), each mass in the plurality of masses disposed within a cavity defined by one hollow tube in the plurality of hollow tubes.

11. The system of claim 10, wherein at least two nodes (110c, 120c) in the first matrix of nodes are configured to be simultaneously energized.

12. A method (1200) comprising:
determining (1210) a location of a contact on a touch-sensitive surface;
determining (1220) a node (110a, c) based on the location of the contact, the node bonded to a hollow tube (130a, c), the hollow tube defining a cavity and having a mass (140a, c) disposed within the cavity; and
energizing (1230) the node (110a, c) to output a haptic effect by causing the mass (140a, c) to move within the cavity.

13. The method of claim 12, wherein the node (110a, c) is bonded to a first end of the hollow tube (130a, c) and a second node (120a, c) is bonded to a second end of the hollow tube (130a, c), the second end opposite the first end, and wherein the node (110a, c) and the second node (120a, c) are simultaneously energized to output the haptic effect by causing the mass (140a, c) to move within the cavity.

14. The method of claim 12, wherein the node (110a, c) and a plurality of other nodes (110b, 110d) are energized in a sequence to output the haptic effect.

15. The method of claim 14, wherein the haptic effect comprises a wave haptic effect produced by energizing the node (110a) and the plurality of other nodes in the sequence, and wherein the sequence comprises energizing the node (110a), then energizing a second node (110b) that is adjacent to the node, and then energizing a third node (110c) that is adjacent to the second node, and optionally wherein the sequence further comprises deenergizing the node (110a) prior to energizing the second node (110b) and deenergizing the second node prior to energizing the third node (110c).
